# EUROPÄISCHE PATENTSCHRIFT

(11) **EP 0 623 277 B1**
(45) Veröffentlichungstag und Bekanntmachung des Hinweises auf die Patenterteilung: **14.01.1998**
(21) Anmeldenummer: 94105739.0
(22) Anmeldetag: 14.04.1994
(51) Int. Cl.: A01G 17/10, D07B 1/00

(54) **Seilverbindungen, insbesondere zur Sicherung von Baumelementen, wie Ästen oder Baumkronenteilen**
Rope linkages, particularly for the strengthening of parts of trees, like limbs or crown parts
Liaison par câbles, notamment pour la consolidation de parties d'arbres, telles que des branches ou des parties du houppier

(30) Priorität: 01.05.1993 DE 4314379
(43) Veröffentlichungstag der Anmeldung: 09.11.1994
(73) Patentinhaber: Wessolly, Lothar, Dr., D-70184 Stuttgart (DE)
(72) Erfinder: Vetter, Hans, D-70184 Stuttgart (DE); Wessoly, Lothar, D-70184 Stuttgart (DE)
(74) Vertreter: Patentanwälte Ruff, Beier, Schöndorf und Mütschele

(56) Entgegenhaltungen:
- DE-A- 3 129 857
- DE-A- 3 318 009
- DE-U- 9 211 619
- US-A- 4 036 101

## Beschreibung

Die Erfindung betrifft ein Seilverbindungssystem, insbesondere zur Sicherung von Baumelementen wie Ästen oder Baumkronenteilen und zu ihrer Verbindung miteinander.

Zur Erhaltung und Pflege von Bäumen, insbesondere älteren und wertvollen Bäumen, sowie zur Vermeidung von Unfällen durch heruntergebrochene Äste ist es häufig notwendig, einzelne Äste oder bestimmte Teile einer Baumkrone dadurch zu sichern, daß sie mit einem Seilverbindungssystem mit anderen Baumkronenteilen verbunden werden. Zu diesem Zwecke sind bereits Gurte mit Verstell-Schnallen verwendet worden. Sie sind herstellungsmäßig aufwendig, optisch unschön und die Verstellmechanismen verschieben sich häufig von selbst und müssen nachgespannt werden.

Zum Teil werden auch Stahl-Gewindestangen mit Drahtseilen für derartige Zwecke eingesetzt, die jedoch das lebende Holz verletzten und sehr unflexibel sind.

Zur Baumsicherung ist aus dem DE-U-92 11 619.1 bekanntgeworden, Bandagen ähnlich einem Gürtel um Baumelemente, wie Äste oder dgl., zu schnallen und in zwei Schlaufen am Ende des Gurtes Seilschlaufen eines Seiles einzuführen. Dieses System erfordert spezielle Haltegurte, die auf den jeweiligen Durchmesser des Baumteils abgestimmt sein müssen. Sie liegen fest um den Baum herum und müssen dort angeschnallt und dann in der jeweilig gewünschten Länge mit dem Seil verbunden werden.

Es sind ferner Seilverbindungssysteme bekannt, und zwar für Abschleppseile, bei denen aufgrund des Seilaufbaus nach dem Oberbegriff des Anspruchs 1 eine Schlauchspleißung möglich ist (DE-A-33 18 009).

Die US-A-4 036 101 zeigt ein kompliziertes Spleißsystem für Doppel-Schlauchmantelseile.

Aufgabe der Erfindung ist es, ein Seilverbindungssystem sowie ein Verfahren und eine Verwendung dafür zu schaffen, das besonders einfach zu montieren ist, an Ort und Stelle leicht angepaßt werden kann und baumschonend ist.

Diese Aufgabe wird durch die Ansprüche 1, 12 und 13 gelöst.

Die Ausbildung des Seilverbindungssystemes aus einem derartigen, im unbelasteten Zustand in Durchmesser und Länge extrem veränderbaren Schlauchgeflecht schafft zahlreiche Vorteile: Obwohl das Seil wegen seiner hauptsächlich in Längsrichtung verlaufenden Stränge und Fasern eine sehr große Festigkeit hat und daher bei geringem Gesamtdurchmesser große Kräfte übertragen kann, kann es auf Wunsch mittels Durchmesserveränderung zahlreiche Funktionen erfüllen. Es ist durch Schlauchspleißen herstellbar, d. h. das Seil kann durch eine Masche zwischen den Strängen mit seinem Ende in den Innenkanal hineingesteckt werden und kann dort infolge seiner relativ großen Steifheit auch leicht vorangeschoben werden. Wenn das Seil dann gleichmäßig belastet wird, dann zieht sich der Abschnitt des Spleißes, der nun außen liegt, so stark zusammen, daß es den innenliegenden Abschnitt kraftschlüssig festklemmt bzw. bekneift. Zu einer Sicherung trägt es auch bei, daß die einzelnen Stränge oder Kardeele sich etwas ineinander verzahnen, so daß in gewissem Maße auch eine formschlüssige Sicherung zustande kommt.

Ein solcher Schlauchspleiß hält schon bei relativ geringer ineinandergeschobener Länge, kann aber beliebig auch in seiner Länge verändert werden, so daß dadurch eine Längenanpassung möglich ist.

Zur Verringerung der Flächenpressung auf die lebenden Holzteile wird eine Bandage um ein Baumelement o. dgl. hergestellt, die ein Mehrfaches der Breite hat wie das Seil im Normalzustand, indem man ein Spreizband in den Innenkanal einschiebt, das eine Breite hat, die bei der Verformung dieses Innenkanals im gestauchten Zustand des Seils gerade hineinpaßt.

Die somit einstückig aus dem Seil gebildete, von innen durch ein Spreizband unterstützte Bandage kann damit etwa die 2,5-fache Breite des Rohrdurchmessers des Seils haben. Als Scheuerschutz und zur zusätzlichen Abpolsterung kann über diese Bandage noch ein Schutzschlauch, z.B. aus einem Gewebeschlauch-Material gezogen werden, der aber keine Zugkräfte übertragenden Funktionen hat.

Besonders bevorzugt ist es, wenn ein Endstück verwendet wird, das aus einer Hülse aus wärmeschrumpfbarem Kunststoff besteht. Eine solche Endhülse kann auf das abgeschnittene Schlauchende aufgeschoben und mittels eines einfachen Gasbrenners oder Feuerzeugs aufgeschrumpft werden. Dabei bildet sich am seilseitigen Ende der Schrumpfhülse meist ein kleiner aufwärtsstehender Grad, der widerhakenartig wirkt und somit eine zusätzliche Sicherung des Spleißes ergibt. Durch diese Schrumpfhülse wird aber vor allem das vordere Ende des Seils so umschlossen, daß keine Hindernisse vorstehen, die das Einführen des Seilendes in den Schlauchspleiß behindern könnten. Zwar ist das Seil vorzugsweise aus thermoplastischem Kunststoffmaterial, beispielsweise Polypropylen, gefertigt und läßt sich somit auch durch Schmelzen abtrennen, jedoch erfordert die Formung eines wirklich sauberen, leicht einführbaren Endes Übung und Geduld, was durch die Schrumpf-Endhülse entfällt.

Der Schlauchspleiß kann zusätzlich gesichert werden, indem eine Manschette, beispielsweise ein Stückchen Schrumpfschlauch, außen über den Spleiß gezogen und aufgeschrumpt wird. Damit ist der Spleiß auch gegen gewolltes Öffnen gesichert, was anderenfalls durch einseitige Belastung des Spleißes (Ziehen ausschließlich an dem eingeführten Ende) möglich wäre.

Die Herstellung des Seils aus monofilen Kunststoffasern oder -drähten mit relativ großem Durchmesser von über 0,1 mm gibt dem Seil eine große Abriebfstigkeit und macht es nach außen hin relativ hart und schubfest, obwohl durch die extrem lockere Bindung aus sich kreuzenden, d. h. miteinander einfach verflochtenen Doppelsträngen mit großen Zwischenräumen zwischen den einzelnen Strängen das Seil selbst sehr flexibel und lehnig ist.

Die Erfindung ermöglicht ferner die Lösung eines auch bei der Verbindung von Baumelementen auftretenden Problems. Da die Kronen von Bäumen sich bewegen und auch bewegen müssen, werden die sie verbindenden Sicherungselemente insbesondere bei Windbelastung ständig entspannt und wieder gespannt, was zu hoher Belastung der Verbindungselemente selbst, vor allem aber auch der Baumelemente an den Verbindungsstellen führt. Außer einem Bruch der Verbindungselemente können insbesondere Beschädigungen der Baumrinde auftreten und bei besonders heftigem Rucken in dem Element können sogar Äste aufgrund der dynamischen Belastung abbrechen.

Erfindungsgemäß wird ein Ruckdämpfer in einem Baumsicherungssystem verwendet, der in idealer Weise in das Seil integriert ist. Dazu ist es möglich, die extreme Aufweitungsmöglichkeit des Seiles dazu zu benutzen, schlauchspleißartig einen Dämpferkörper einzuschieben, der selbst auch aus einem weichelastischen Material, beispielsweise einem Gummi geringerer Härte, ggf. auch aus einem Schaumstoff, bestehen kann. Bei Auftreten von Zug an diesem Ruckdämpfer wird dieser Dämpfungskörper sowohl im Durchmesser zusammengeschnürt als auch in die Länge verformt. Dies entspricht der Tendenz des Seiles, sich bei Zugbelastung zu strecken und seinen Durchmesser unter Längung zu verringern. Ein Vorteil dieses integrierten Systems ist auch, daß das Seil mit seiner vollen Haltekraft erhalten bleibt, auch wenn der Dämpferkörper geschädigt wird. Selbst eine völlige Durchtrennung des Dämpferkörpers würde weder die Dämpfungswirkung noch den Zusammenhalt des Seiles beeinträchtigen.

Dieses System hat auch noch den Vorteil, daß der Ruckdämpfer durch Verschiebung des Dämpferkörpers in dem Seil an jede beliebige Stelle geschoben werden kann, so daß örtlichen Gegebenheiten Rechnung getragen werden kann. Es ist auch möglich, nachträglich noch zusätzliche Dämpfer einzufügen, wenn dies erforderlich ist.

Hierzu ist zu bemerken, daß in Seile integrierte Dämpfer bereits als Anlegefedern für Sportboote vorgeschlagen wurden. Dabei wurden Knäule von dünnen Gummifäden als Seele von einem dicht geflochtenen Kunststoffseil bei der Verseilung umschlossen und mit der ebenfalls aus einem Flechtseil bestehenden Seele auf Zug verbunden. Ein solcher Dämpferkörper läßt sich nicht nachträglich einführen und benutzt das äußere Seil nur als Mantel, aber nicht als integrierter Bestandteil des Dämpfers.

Diese und weitere Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten vewirklicht sein und vorteilhafte sowie für sich schutzfähige Ausführungen darstellen können, für die hier Schutz beansprucht wird. Ausführungsbeispiele der Erfindung sind in der Zeichnung dargestellt und werden im folgenden näher erläutert.

Es zeigen:
- Fig. 1: eine schematische Darstellung eines Seilverbindungssystems zwischen zwei Baumelementen,
- Fig. 2: eine Seitenansicht eines Seilstücks im Normalzustand,
- Fig. 3: eine Seitenansicht des Seils nach Fig. 2 im gestauchten Zustand,
- Fig. 4: eine schematische Darstellung eines integrierten Ruckdämpfers,
- Fig. 5: die Seitenansicht eines Dämpferkörpers für den Ruckdämpfer,
- Fig. 6: ein Spreizband für eine Bandage in Seitenansicht,
- Fig. 7: eine perspektivische Darstellung einer Bandage und eines Spleiß,
- Fig. 8: einen Schnitt durch die Bandage nach der Linie VIII in Fig. 7,
- Fig. 9 bis 11: Draufsichten auf mehrere Ausführungsformen einer Bandage um ein Baumelement

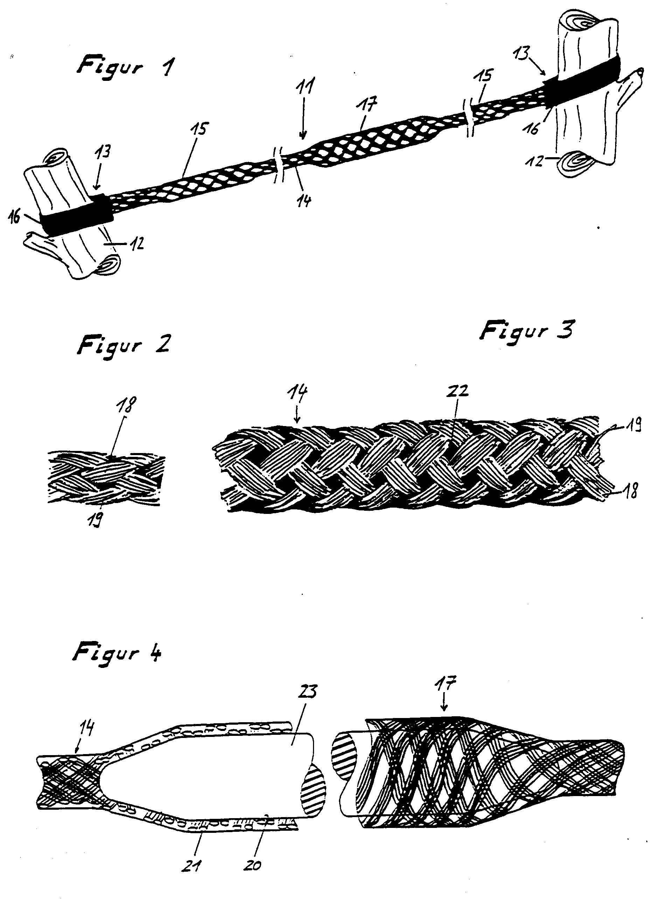

Fig. 1 zeigt ein Seilverbindungssystem 11, das zum Verbinden von Baumelementen, d. h. Ästen untereinander, mit Stämmen o. dgl. eingesetzt ist. Um die Baumelemente herum liegen Bandagen 13, die einstückig mit einem Seil 14 ausgebildet sind. Die Bandagen 13 sind durch Spleiße 15 aus dem Seil 14 hergestellt. Bei Bedarf können die Bandagen durch einen übergeschobenen Schlauch 16 als Scheuerschutz ergänzt werden. Das Seilverbindungssystem enthält einen in das Seil 14 integrierten Ruckdämpfer 17.

Das Seil ist in Fig. 2 in Außenansicht dargestellt. Es handelt sich um ein hohles Schlauchgeflecht aus einzelnen Strängen 18. Die Stränge sind relativ schwach gedrehte Kardeele aus zahlreichen monofilen Kunststoffäden oder -drähten 19, die eine erhebliche Dicke von über 0,1 mm haben und über die gesamte Seillänge durchlaufen. Sie bestehen aus einem thermoplastischen Kunststoff, vorzugsweise Polypropylen und sie sind entsprechend UV-stabilisiert.

Jeweils zwei Stränge 18 verlaufen parallel. Das Seil kann beispielsweise aus acht dieser Doppelstränge bestehen, die zu einem relativ lockeren Schlauchgeflecht zusammengeflochten sind. Infolge der großen Eigensteifigkeit der Stränge legt sich allerdings das Seil in Längsrichtung so zusammen, daß es im unbelasteten Zustand (Fig. 2) nahezu seine volle Längserstreckung, die es auch im zugbelasteten Zustand einnehmen würde.

Wenn man das Seil jedoch staucht, dann nimmt es die in Fig. 3 gezeigte Struktur an. Es weitet sich dann ganz erheblich im Durchmesser, und zwar so weit, daß der sich dann bildende hohle Innenkanal 20 beispielsweise den doppelten Durchmesser (das 1,5- bis 2,5-fache) des Seils im unbelasteten Zustand hat. Um diesen Innenkanal 20 liegt dann das Geflecht nach Art eines Mantels 21 herum.

Durch die relativ lockere Flechtung entstehen, wie Fig. 3 zeigt, zwischen den Doppelsträngen 18 relativ große Maschen 22, d. h. Öffnungen, die von außen in den Innenkanal 22 führen. Durch diese können beliebige Gegenstände in den Innenkanal geschoben werden.

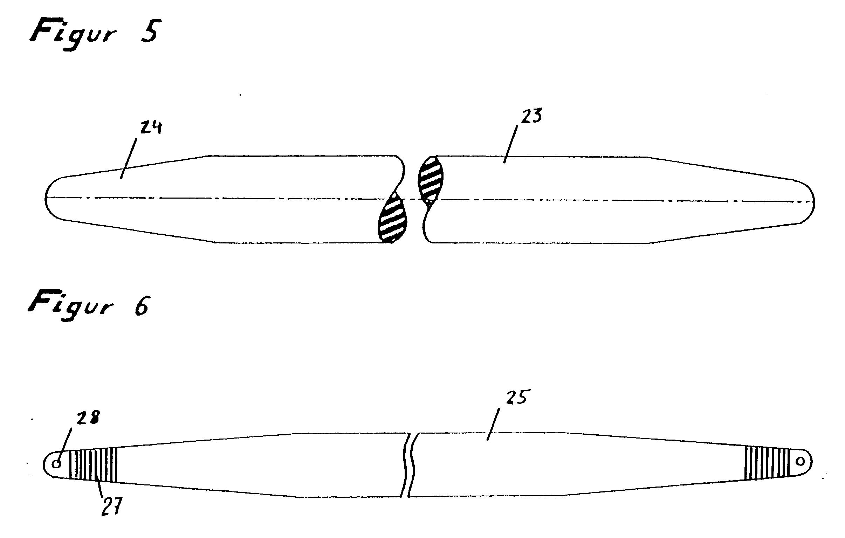

In Fig. 4 ist auf diese Weise ein integrierter Ruckdämpfer 17 entstanden. Ein Dämpferkörper 23 (Fig. 5) hat die Form eines langgestreckten Zylinders mit verjüngten Enden 24. Er besteht aus einem weichelastischen Material, beispielsweise Gummi mit niedriger Shore-Härte, Kunststoff, oder einem Formkörper, der seine Elastizität vom Werkstoff und/oder seiner Form bezieht. Der Außendurchmesser ist kleiner als der maximale Durchmesser des Innenkanals 20, der durch Aufweiten nach Fig. 3 zu erzielen ist, so daß der Dämpferkörper 23 bequem durch eine Masche 22 in das Seil eingeführt und dort an die richtige Stelle geschoben werden kann. Wenn nun das Seil längs belastet wird, schließt sich der Mantel 21 dicht um den Dämpferkörper und preßt ihn im Inneren fest. Bei noch stärkerer Belastung wird der Dämpferkörper durch Druckbeanspruchung in radialer Richtung und gleichzeitige Längung gestreckt. Mit ihm streckt sich das Seil und bildet somit eine Elastizitätsreserve in der Seilverbindung. Dazu kommt noch die Eigenelastizität des Seils, das mehrere Prozent Längendehnung vor einem Bruch oder anderer bleibender Veränderung erträgt.

Auf diese Weise kann eine solche Kronensicherung relativ straff angespannt werden. Bewegungen der Baumelemente gegeneinander sind jedoch im Rahmen der Elastizität des Ruckdämpfers möglich. Der Ruckdämpfer ist aber auch vorteilhaft, wenn das System selbst nicht ganz straff angespannt ist. In dem Falle können sich die Baumelemente anfänglich frei bewegen. Wenn sie jedoch an die Grenze ihrer Bewegungsfreiheit kommen, dann fängt der Ruckdämpfer den anderenfalls entstehenden Ruck elastisch und/oder dämpfend ab. Dabei wird je nach der verwendeten Art des Dämpferkörpers nicht nur eine reine Federung erzeugt, die zu einem entsprechenden Zurückschnellen führen würde, sondern es wird im Ruckdämpfer auch nach Art eines Stoßdämpfers Energie absorbiert und vernichtet.

Der Ruckdämpfer kann entsprechend den Erfordernissen ausgeführt werden. So könnten beispielsweise auch mehrere Dämpferkörper mit geringerer Längserstreckung, beispielsweise Kugeln oder kurze Zylinderstücke, hintereinander in das Seil integriert werden.

Fig. 6 zeigt ein Spreizband 25 für die Bandage 13. Dieses wird in das durch Stauchung aufgeweitete Seil in einigem Abstand von einem Seilende 26 in das Seil eingeführt. Seine Breite ist so bemessen, daß es den Innenkanal, nachdem es ihn flach verformt hat, relativ gut ausfüllt, wenn er seine größte Erstreckung hat. Auf diese Weise kann das Band etwa das 2 1/2-fache des normalen Seildurchmessers breit sein. Durch großzügige Verjüngungen an den Enden des Spreizbandes läuft die Bandage sanft in das normale Seil über. Griffprofilierungen 27 und ein Durchbruch 28 an jedem Ende erleichtern das Einführen, beispielsweise durch Ansetzen eines Dorns.

Die Bandage 13 ist Teil einer Schlaufe, die durch den Spleiß 15 aus dem Seil gebildet wird. Dazu wird ein Seilende mit einem Endstück 29 versehen, das aus einer einseitig offenen Hülse oder Kappe aus wärmeschrumpfbarem Kunststoffmaterial besteht. Es hat normalerweise einen größeren Innendurchmesser als das Seilende, wird auf dieses aufgeschoben und durch Wärme, beispielsweise einen Gasbrenner, kurz erwärmt, so daß es sich fest um das Seilende schließt. Dadurch wird nicht nur das Seilende gut zusammengehalten, sondern durch eine entsprechend abgeschrägte bzw. abgerundete Stirnseite 30 des Endstücks wird die Einführung durch eine Masche 22 und das Verschieben innerhalb des Seils erleichtert. Durch das Schrumpfen bildet sich meist im Bereich der Öffnung des hülsenförmigen Endstückes eine nach außen vorstehende Aufbiegung 31 mit einer relativ scharfen Kante. Diese entsteht dadurch, daß in diesem Endbereich meist weniger Wärme aufgebracht wird. Sie schafft den Vorteil, daß sie praktisch eine widerhakenartige Verriegelung des Endstücks im Inneren des Mantels 21 des das eingeschweißte Ende 26 umgebenden Seilabschnittes bildet. Durch einfaches Einstecken ist der Spleiß normalerweise schon gegen Herausziehen gesichert, sofern, was bei der Bandage sichergestellt ist, beide Seiten der Bandage gleichmäßig belastet werden. Es ist jedoch möglich, den Spleiß endgültig dadurch zu sichern, daß ein Schrumpfschlauchabschnitt 32 als Manschette über den eingespleißten Abschnitt geschoben und darauf gesichert wird. Es sind auch andere Sicherungsmöglichkeiten, beispielsweise durch ein selbstvulkanisierendes Band oder andere den Spleiß umgebende Elemente, möglich.

Zur Anbringung des Seilverbindungssystems kann wie folgt verfahren werden:

Es ist ein Vorteil des Systems, daß es an Ort und Stelle bemessen und montiert werden kann, ohne daß eine Lagerhalterung unterschiedlicher Seillängen oder sonstiger Sonderteile erforderlich ist. Es ist aus den beschriebenen Bauteilen in jeder Konfiguration und im wesentlichen ohne Werkzeuge zu montieren.

Ein Baumpfleger kann in einem üblichen Hubwagen vor Ort die entsprechende Seillänge von einer Rolle abmessen, sie mit dem Messer einer Flamme oder einer beheizten Schneide abschneiden und die Endstücke 29 auf den Seilenden anbringen und festschrumpfen. Danach kann er nahe jedem Seilende ein Spreizband 25 einziehen und entsprechend dem Bedarf einem Dämpferkörper 23 zur Bildung eines Ruckdämpfers an der entsprechenden Stelle einführen.

Die Ablängung und Anbringung des Endstücks 29 kann auch dadurch erfolgen, daß ein entsprechend bemessener Schrumpfschlauch über das Seil geschoben wird. Er kann die doppelte Länge haben, die für das Endstück beabsichtigt ist. Durch Erhitzen in der Mitte wird gleichzeitig der Schrumpfschlauch auf die beiden entstehenden Seilenden aufgeschrumpft und das Seil in der Mitte soweit erweicht, daß durch Auseinanderziehen Strumpfschlauch und Seil in zwei Enden getrennt werden, die mit einer geschlossenen, verjüngten Spitze versehen werden. Es entstehen damit gleichzeitig zwei mit Endstücken versehene Enden.

Nachdem er ggf. an beiden Enden noch den Schutzschlauch 16 und eine Manschette 32 aufgefädelt hat, kann er nun die Bandage 13 um das jeweilige Baumelement herumlegen und, jeweils durch Stauchung des Seils 14, das Ende 26 in den Innenkanal einführen und somit den Spleiß bilden. Dabei können eventuelle durch fehlerhaftes Abmessen bedingte Längendifferenzen einfach dadurch ausgeglichen werden, daß der Spleiß länger oder kürzer gemacht wird. Auf diese Weise läßt sich das System auch später nachregulieren, sofern keine Sicherungsmanschette 32 vorgesehen wurde, die sonst gelöst werden müßte.

Die Ausbildung der Bandage mit einem Schlauchspleiß der beschriebenen Art hat, wenn der Schlauchspleiß nicht durch eine Sicherungsmanchette 32 gesichert ist, einen zusätzlichen, erstaunlichen Vorteil:

Obwohl der Spleiß, in Zugrichtung belastet, hohe Belastungen aufnehmen kann, zieht er sich, wenn die Bandage von innen her vergrößert wird, von allein auseinander. Das hat den Vorteil, daß die Bandage mit dem Baum "mitwächst". Es ist lediglich dafür zu sorgen, daß der Spleiß ausreichend lang ist. Wenn der Durchmesser des entsprechenden Baumteils sich vergrößert, so tritt ein innerer Zug in der die Bandage bildenden Schlaufe auf und der Spleiß zieht sich um den entsprechenden Betrag heraus, ohne sich dabei zu lösen. Diese automatische Selbstnachstellung des Spleißes verhindert es, daß eine Bandage in den Baum einwächst und so dessen natürliches Wachstum behindert.

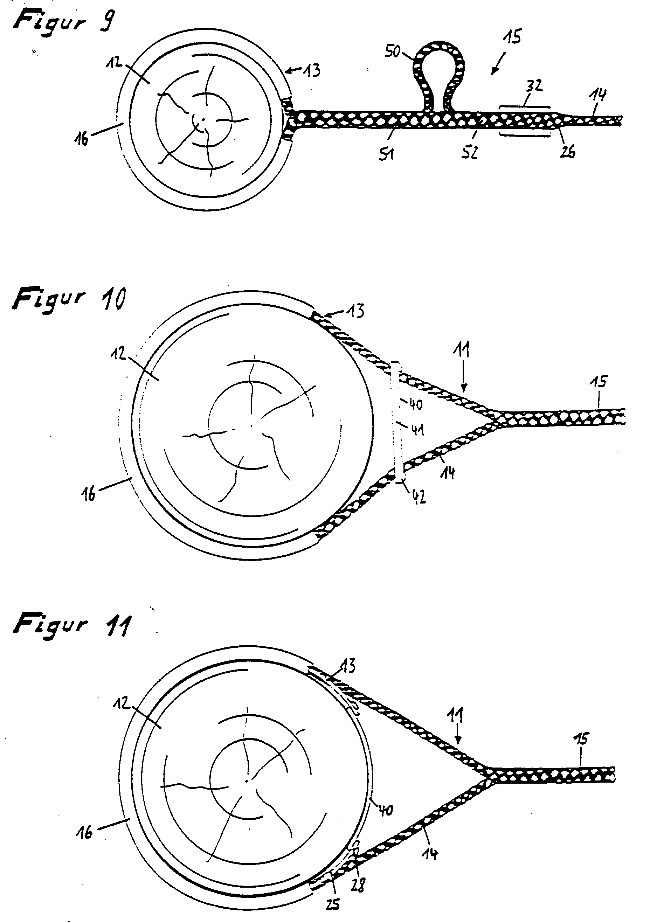

Fig. 9 zeigt eine Ausführung, bei der die Bandage eng um das Baumelement 12 herumgezogen ist, sodaß sie sich auch dann halten kann, wenn sie gegen Längsverschiebung nicht durch eine Astgabel o. dgl. gesichert ist. Um trotzdem das "Mitwachsen" der die Bandage 13 bildenden Schlaufe zu ermöglichen, ist der Spleiß 15 in zwei Abschnitte unterteilt, und zwar einen näher an dem Baumelement 12 liegenden Abschnitt 51, in dessen Bereich der Spleiß bei einer die Schlaufe aufweitenden inneren Belastung sich automatisch nachzieht, und einen davon entfernter liegenden Abschnitt 52, der ggf. durch eine Manschette, beispielsweise einen darübergezogenen Schrumpfschlauch 32, gegen Öffnen gesichert ist. Zwischen den Abschnitten 51, 52 liegt eine lose Schlaufe 50 des das Innere des Spleißes bildenden Seilabschnitts, die durch eine oder benachbarte Maschen des den Außenmantel des Spleißes bildenden Seilabschnitts hindurch nach außen und wieder hineingezogen ist. Beim Spleißen wird also das Ende 26 des inneren Spleißabschnittes im Abstand vom Baumelement durch eine Masche nach außen gesteckt und durch die gleiche oder eine benachbarte Masche wieder hineingezogen und dann bis zum Ende so durchgeführt, daß die außenliegende Schlaufe 50 übrig bleibt, die einen Zuwachsvorrat für eine Vergrößerung des Baumelementes bildet. Wenn sich also das Baumelement weitet, so wird im Abschnitt 51 der Innenabschnitt des Spleißes 15 nachgezogen, verkleinert die Schlaufe 50, während der Abschnitt 52 unter allen Umständen fest bleibt, da er durch die Manschette 32 oder auf andere Weise, beispielsweise durch quer durch verlaufende Sicherungsmittel wie Klammern o. dgl. gesichert ist.

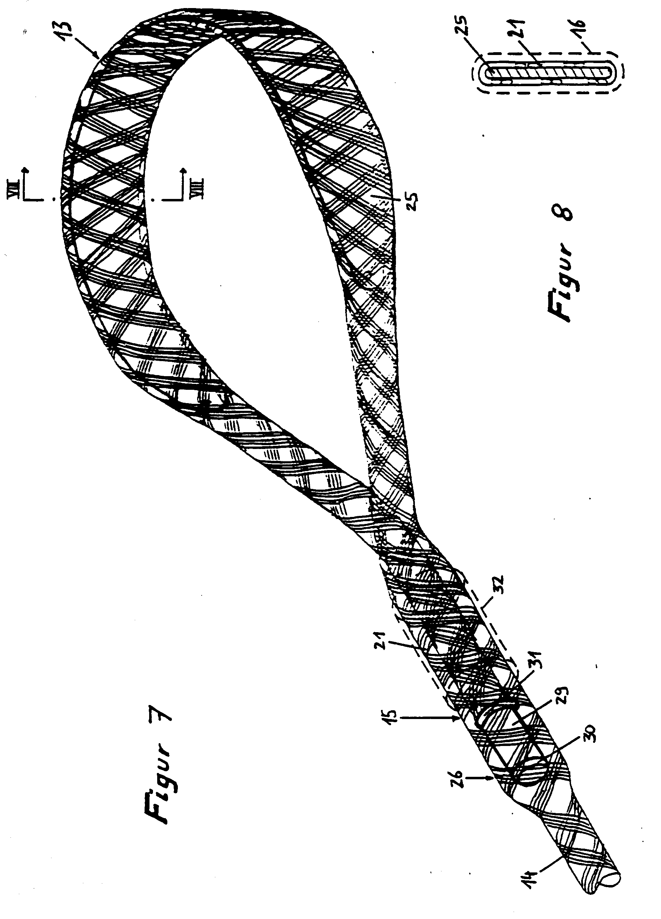

Wenn beide Bandagen 13 auf diese Weise fertiggestellt sind, ist die entsprechende Kronensicherung vorgenommen. Sie läßt sich nachstellen und auch leicht wieder demontieren, weil der Spleiß sich bei entsprechender Belastung (einseitiges Ziehen nur am in Fig. 7 oben liegenden Ende) öffnen läßt.

In Fällen, in denen die Bandage an dem Baumelement in dessen Längsrichtung nicht durch eine Astgabel o. dgl. gesichert ist, kann eine Sicherung gegen Verschiebung der Bandage dadurch vorgenommen werden, daß entweder die Bandage eng um das Baumelement herumgezogen wird, wobei die oben beschriebene automatische Selbstnachstellung dafür sorgt, daß der Baum trotzdem Wachstumsfreiheit hat. Es ist aber auch möglich, entsprechend Fig. 10 ein Spannelement 40 vorzusehen, daß beispielsweise aus Gummi oder anderem elastischem Material besteht. Es hat einen Stiel 41 mit zwei demgegenüber verdickten Köpfen 42 und ist so ausgebildet, daß es durch eine Masche 22 des gestauchten Seils hindurchgeschoben werden kann und sich hinter dem Seil verriegelt. Das Spannelement ist so bemessen bzw. wird so eingebaut, daß es, wenn das gesamte Seilverbindungssystem 11 entlastet ist, die Bandage 13 dicht an das Baumelement heranzieht und in dem in Fig. 9 dargestellten belasteten Zustand sich selbst dehnt und das Seil straff werden läßt. Es kann somit trotz einer reichlichen Zugabe in der die Bandage bildenden Schlaufe eine Längssicherung geschaffen werden. Es entsteht auf eine zusätzliche Abfederung und Ruckdämpfung.

Fig. 11 zeigt eine Ausführung, bei der eine ähnliche Wirkung durch einen anderen elastischen Gegenstand 40, beispielsweise ein Stückchen Gummischnur bewirkt wird, die durch die Durchbrüche 28 in den Enden des Spreizbandes 25 gezogen und dahinter verknotet oder anderweitig festgelegt ist. Damit diese Durchbrüche an den Enden des Spreizbandes zugänglich sind und andererseits das Seil auch im unbelasteten Zustand die normale in Fig. 10 dargestellte gestreckte, auf den Spleißpunkt zulaufende Gestalt behalten kann, sind die Enden des Spreizbandes 25 an der Stelle, an der das Seil tangential das Baumelement verläßt, aus einer entsprechenden Masche 22 herausgeführt und liegen nunmehr zusammen mit dem Spannelement 40 an dem Baumelement an. Auch hier wird eine Längssicherung geschaffen, die unter allen Bedingungen erhalten bleibt. Durch die Elastizität des Spannelementes 40 wird das Baumwachstum ebenfalls nicht behindert.

Es ist zu erkennen, daß mit diesem einfachen und zweckmäßigen System die Erfordernisse für eine Kronensicherung auf ideale Weise erfüllt werden. Vor allem wird ein System geschaffen, das mit einer geringen Anzahl von lagermäßigen Standardbauteilen vor Ort in jeder beliebigen Konfiguration zusammengestellt werden kann. Es ist auch für andere Zwecke einsetzbar, insbesondere durch die vorteilhafte Ruckdämpfung.

## Patentansprüche

1. Seilverbindungssystem, wobei ein Seil (14) aus einem durch Stauchung verkürzbaren und sich dabei verdickenden, aus Strängen (18) geflochtenen Schlauchgeflecht besteht, bei dessen Stauchung ein freier Innenkanal (20) entsteht, der größer ist als der Seilaußendurchmesser in ungestauchtem Zustand, und daß die Flechtung so locker ist, daß zumindest im gestauchten Zustand zwischen den Strängen (18) Maschen (22) entstehen, die zumindest auf die Größe des Seilaußendurchmessers aufweitbar sind, und wobei das Seil durch Schlauchspleißung an beliebiger Stelle zu einer Schlaufe formbar ist, dadurch gekennzeichnet, daß die Schlaufe als schlauchförmige flache Bandage (13) einstellbarer Größe um ein Baumelement (12) herum formbar ist in deren Bereich ein Spreizband (25) in das Seil eingeschoben ist.

2. System nach Anspruch 1, dadurch gekennzeichnet, daß der Innenkanal (20) im gestauchten Zustand einen Durchmesser hat, der das 1,5- bis 2,5-fache, vorzugsweise das 2-fache des Außendurchmessers, beträgt.

3. System nach Anspruch 1 oder 2, dadurch gekennzeichnet, daß das Seil (14) aus mehreren, vorzugsweise acht, Doppelsträngen (18) mit je zwei nebeneinanderliegenden Einzelsträngen (18) besteht.

4. System nach einem der vorhergehenden Ansprüche, dadurch gekennzeichnet, daß die Stränge (18) aus monofilen Kunststoffäden bzw. -drähten (18) mit einem Durchmesser von 0,1 mm oder mehr bestehen, wobei vorzugsweise die Stränge schwach gedreht sind.

5. System nach einem der vorhergehenden Ansprüche, dadurch gekennzeichnet, daß das Seil (14) aus thermoplastischem Kunststoff, vorzugsweise aus Polypropylen, besteht.

6. System nach einem der vorhergehenden Ansprüche, dadurch gekennzeichnet, daß das Spreizband (25) aus Kunststoff-Flachmaterial, zu seinen Enden in der Breite abnehmend, ausgebildet ist, und ggf. an seinen Enden Griffprofilierungen (27) und/oder Durchbrüche (28) aufweist, wobei vorzugsweise im Bereich der Bandage (13) ein Schutzschlauch (16) auf das Seil aufbringbar ist.

7. System nach einem der vorhergehenden Ansprüche, dadurch gekennzeichnet, daß auf wenigstens ein Seilende (26) ein Endstück (29) aufbringbar ist, vorzugsweise eine Schrumpfkappe oder ein Abschnitt eines Schrumpfschlauches.

8. System nach einem der vorhergehenden Ansprüche, dadurch gekennzeichnet, daß der Schlauchspleiß (15) im Spleißbereich, in dem das Seil (14) doppelt liegt, durch eine Manschette (32), vorzugsweise einen Schrumpfschlauch, sicherbar ist.

9. System nach einem der vorhergehenden Ansprüche, gekennzeichnet durch wenigstens einen in das Seil (14) zu integrierenden Ruckdämpfer (17), der vorzugsweise ein in den Innenkanal (20) des Seils (14) einführbaren Dämpferkörper (23) aufweist, der vorzugsweise einen größeren Durchmesser als das Seil (14) aufweist, vorzugsweise den ca. 1,5-fachen Durchmesser, und/oder eine langgestreckte, ggf. sich zu seinen Enden verjüngende, kreisrundzylindrische Form hat, und vorzugsweise eine Länge vom 10- bis 40-fachen, bevorzugt ca. dem 20-fachen, seines Durchmessers hat, und ggf. aus einem weichelastischen Werkstoff besteht.

10. System nach einem der vorstehenden Ansprüche, gekennzeichnet durch ein elastisches Spannelement (40), das an dem Seil und/oder einem Spreizband (25) im Bereich einer Bandage (13) angebracht ist und die Bandage (13) zumindest im unbelasteten Zustand elastisch an das Bauelement (12) angedrückt hält.

11. System nach einem der Ansprüche 6 bis 10, dadurch gekennzeichnet, daß der Spleiß (15) zwei Spleiß-Längsabschnitte (51, 52) aufweist, zwischen denen eine Schlaufe (50) des das Innere des Spleißes (15) bildenden Seilabschnitts durch eine Masche (22) des das Äußere des Spleißes bildenden Seilabschnitts heraus und durch die gleiche oder eine andere Masche wieder hineingezogen ist, wobei ggf. der am Baumelement (12) entfernte Spleiß-Längsabschnitt (52) gegen Herausziehen gesichert ist.

12. Verfahren zur Sicherung von Baumelementen (12), wie Ästen oder Baukronenteilen, oder zu ihrer Verbindung miteinander mittels eines Seilverbindungssystems nach dem Oberbegriff des Anspruchs 1, dadurch gekennzeichnet, daß um wenigstens ein Baumelement (12) eine sich zu einer flachen Bandage (13) formende Schlaufe mit einem eingeschobenen Spreizband (25) mittels einer Schlauchspleißung geformt wird, wobei das zum Schlauchspleißen in den Innenkanal (20) des Seils (14) eingeführte Seilende (26) vor dem Einführen mit einem Endstück (29) versehen wird.

13. Verwendung eines Seilverbindungssystems nach dem Oberbegriff des Anspruchs 1 zur Sicherung von Baumelementen (12), wie Ästen oder Baumkronenteilen, oder zu ihrer Verbindung miteinander, wobei in das mit wenigstens einer um ein Baumelement (12) herumgelegten Bandage (13) versehene Seil (14) ein Ruckdämpfer (17) in Form eines in den Innenkanal (20) des Seils (14) einführbaren, aus weichelastischem Werkstoff bestehenden Dämpferkörpers (23) integriert ist, und wobei im Bereich der Bandage (13) ein Spreizband (25) eingeschoben ist.

## Claims

1. Rope linkage system, in which a rope (14) comprises a tubular braid shortenable by compression and which thereby thickens and which is braided from strands (18), during whose compression a free inner channel (20) is formed, which is larger than the rope external diameter in the uncompressed state and that the braiding is so loose that at least in the compressed state between the strands (18) are formed meshes (22), which can be widened at least to the size of the rope external diameter and at a random location the rope can be shaped by tube splicing to form a loop, characterized in that the loop as a tubular flat bandage (13) of adjustable size can be shaped round a tree part (12), in whose vicinity an expanding band (25) is inserted in the rope.

2. System according to claim 1, characterized in that in the compressed state the inner channel (20) has a diameter, which is 1.5 to 2.5 times, preferably twice the external diameter.

3. System according to claim 1 or 2, characterized in that the rope (14) comprises several, preferably eight, double strands (18) with in each case two juxtaposed single strands (18).

4. System according to one of the preceding claims, characterized in that the strands (18) comprise monofilament plastic threads or wires (18) with a diameter of 0.1 mm or more and preferably the strands are weakly twisted.

5. System according to one of the preceding claims, characterized in that the rope (14) is made from a thermoplastic material, preferably polypropylene.

6. System according to one of the preceding claims, characterized in that the expanding band (25) is made from flat plastic material and its width decreases towards its ends and optionally at its ends has gripping profilings (27) and/or openings (28) and preferably in the vicinity of the bandage (13) a protective sleeve (16) can be fitted onto the rope.

7. System according to one of the preceding claims, characterized in that onto at least one rope end (26) can be fitted an end piece (29), preferably a shrink cap or a shrink tube portion.

8. System according to one of the preceding claims, characterized in that the tube splice (15) can be secured in the splicing area, where the rope (14) is duplicated, by a collar (32), preferably a shrink tube.

9. System according to one of the preceding claims, characterized by at least one jerking damper (17) to be integrated into the rope (14) and which preferably has a damper body (23) insertable into the inner channel (20) of the cable (14) and which preferably has a larger diameter than the rope (14) and is preferably approximately 1.5 times the diameter, and/or an elongated circular cylindrical shape, optionally tapering towards its ends and preferably has a length of 10 to 40 times, preferably approximately 20 times its diameter and is optionally made from soft elastic material.

10. System according to one of the preceding claims, characterized by an elastic tension element (40), which is fitted to the rope and/or an expanding band (25) in the vicinity of a bandage (13) and, at least in the unloaded state, the bandage (13) is pressed elastically onto the tree part (12).

11. System according to one of the claims 6 to 10, characterized in that the splice (15) has two splice longitudinal portions (51, 52), between which a loop (50) of the rope portion forming the interior of the splice (15) is passed out through a mesh (22) of the rope portion forming the exterior of the splice and is drawn in again through the same or another mesh and optionally the splice longitudinal portion (52) remote from the tree part (12) is secured against pulling out.

12. Method for strengthening tree parts (12), such as branches or crown parts, or for an interconnection by means of a rope linkage system according to the preamble of claim 1, characterized in that around at least one tree part (12) is shaped a loop with an inserted expanding band (25) formed into a flat bandage (13) by means of a tube splice, the rope end (26) inserted in the inner channel (20) of the rope (14) for tube splicing being provided with an end piece (29) prior to insertion.

13. Use of a rope linkage system according to the preamble of claim 1 for strengthening tree parts (12), such as branches or crown parts, or for the interconnection thereof, where in the rope (14) provided with at least one bandage (13) placed around a tree part (12) is integrated a jerking damper (17) in the form of a damper body (23) made from soft elastic material and insertable into the interior channel (20) of the rope (14) and where an expanding band (25) is introduced in the vicinity of the bandage (13).

## Revendications

1. Système de liaison par câble dans lequel un câble (14) est constitué d'un tressage tubulaire souple qui est tressé à partir d'écheveaux (18), peut être raccourci par refoulement avec épaississement simultané, et dont le refoulement donne naissance à un canal intérieur libre (20) plus grand que le diamètre extérieur du câble à l'état non refoulé, le tressage étant peu serré, de manière à donner naissance entre les écheveaux (18), au moins à l'état refoulé, à des mailles (22) pouvant s'élargir au moins jusqu'à la taille du diamètre extérieur du câble, et le câble pouvant être amené à la forme d'une boucle, à n'importe quel emplacement, par épissure de la structure souple, caractérisé par le fait que la boucle peut être amenée à la forme d'un bandage aplati (13) de taille réglable, se présentant comme une structure souple ceinturant la partie (12) d'un arbre, et dans la région duquel un ruban d'écartement (25) est inséré dans le câble.

2. Système selon la revendication 1, caractérisé par le fait que le canal intérieur (20) possède, à l'état refoulé, un diamètre représentant de 1,5 à 2,5 fois, de préférence 2 fois le diamètre extérieur.

3. Système selon la revendication 1 ou 2, caractérisé par le fait que le câble (14) se compose de plusieurs, préférentiellement huit écheveaux doubles (18) comprenant chacun deux écheveaux individuels (18) juxtaposés.

4. Système selon l'une des revendications précédentes, caractérisé par le fait que les écheveaux (18) consistent respectivement en des brins ou des fils (18) de matière plastique monofilament, d'un diamètre de 0,1 mm ou plus, les écheveaux étant, de préférence, faiblement tordus.

5. Système selon l'une des revendications précédentes, caractérisé par le fait que le câble (14) consiste en une matière thermoplastique, préférentiellement en du polypropylène.

6. Système selon l'une des revendications précédentes, caractérisé par le fait que le ruban d'écartement (25) est réalisé en une matière plastique aplatie en diminuant de largeur vers ses extrémités, et comporte éventuellement des profilages de préhension (27) et/ou des perforations (28) à ses extrémités, un flexible de protection (16) pouvant être, de préférence, mis en place sur le câble dans la région du bandage (13).

7. Système selon l'une des revendications précédentes, caractérisé par le fait qu'une pièce d'extrémité (29), de préférence un capuchon rétractible ou un segment d'une gaine rétractible, peut être mise en place sur au moins une extrémité (26) du câble.

8. Système selon l'une des revendications précédentes, caractérisé par le fait que l'épissure (15) de la structure souple peut être consolidée par un fourreau (32), de préférence une gaine rétractible, dans la région épissée dans laquelle le câble (14) se trouve en double.

9. Système selon l'une des revendications précédentes, caractérisé par au moins un amortisseur de secousses (17) devant être intégré dans le câble (14) et comportant, de préférence, un corps d'amortisseur (23) qui peut être introduit dans le canal intérieur (20) du câble (14), présente, de préférence, un plus grand diamètre que le câble (14), préférentiellement environ 1,5 fois ledit diamètre, et/ou est pourvu d'une forme cylindrique droite allongée et se rétrécissant éventuellement vers ses extrémités, possède de préférence une longueur représentant de 10 à 40 fois, préférentiellement environ 20 fois son diamètre, et consiste éventuellement en un matériau souple.

10. Système selon l'une des revendications précédentes, caractérisé par un élément élastique de serrage (40) qui est mis en place sur le câble et/ou sur un ruban d'écartement (25), dans la région d'un bandage (13), et qui, au moins à l'état non contraint, maintient le bandage (13) plaqué élastiquement contre la partie (12) d'un arbre.

11. Système selon l'une des revendications 6 à 10, caractérisé par le fait que l'épissure (15) comprend deux tronçons longitudinaux (51, 52) entre lesquels une boucle (50) du segment de câble, formant l'intérieur de l'épissure (15), est extraite à travers une maille (22) du segment de câble formant l'extérieur de l'épissure, puis est de nouveau insérée à travers la même maille ou une autre maille, le tronçon longitudinal (52) de l'épissure, éloigné de la partie (12) d'un arbre, étant éventuellement arrêté à l'encontre d'une extraction.

12. Procédé pour la consolidation de parties (12) d'arbres, telles que des branches ou des parties de houppier, ou pour leur liaison mutuelle au moyen d'un système de liaison par câble selon le préambule de la revendication 1, caractérisé par le fait qu'une bouche, se déformant en un bandage aplati (13) et munie d'un ruban d'écartement (25) inséré, est déformée autour d'au moins une partie (12) d'un arbre au moyen d'une épissure de la structure souple, l'extrémité (26) du câble, introduite dans le canal intérieur (20) du câble (14) en vue de l'épissure de la structure souple, étant dotée d'une pièce d'extrémité (29) préalablement à l'introduction.

13. Utilisation d'un système de liaison par câble selon le préambule de la revendication 1, pour la consolidation de parties (12) d'arbres telles que des branches ou des parties de houppier, ou pour leur liaison mutuelle, utilisation dans laquelle un amortisseur de secousses (17), revêtant la forme d'un corps d'amortisseur (23) consistant en un matériau souple et pouvant être introduit dans le canal intérieur (20) du câble (14), est intégré dans le câble (14) muni d'au moins un bandage (13) enroulé autour d'une partie (12) d'un arbre ; et dans laquelle un ruban d'écartement (25) est inséré dans la région du bandage (13).
